(19)

Europäisches
Patentamt
European
Patent Office
Office européen
des brevets

(11) **EP 3 182 339 A1**

(12) **EUROPEAN PATENT APPLICATION**

(43) Date of publication:
**21.06.2017 Bulletin 2017/25**

(51) Int Cl.:
***G06N 3/04*** (2006.01)          ***G06N 3/063*** (2006.01)

(21) Application number: **15200681.3**

(22) Date of filing: **17.12.2015**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**MA MD**<br><br>(71) Applicant: **VRIJE UNIVERSITEIT BRUSSEL**<br>**1050 Brussel (BE)** | (72) Inventors:<br>• **KEUNINCKX, Lars**<br>  **2800 Mechelen (BE)**<br>• **VAN DER SANDE, Guy**<br>  **2820 Bonheiden (BE)**<br>• **DANCKAERT, Jan**<br>  **1020 Brussel (BE)**<br><br>(74) Representative: **DenK iP**<br>**Hundelgemsesteenweg 1116**<br>**9820 Merelbeke (BE)** |

(54) **RESERVOIR COMPUTING DEVICE**

(57)   The present invention relates to a reservoir computing device comprising a cascade of at least two reservoir computing blocks, each reservoir computing block comprising

- summing means for making a sum of a block input signal and a delayed signal output by the reservoir computing block,

- a digital filter structure arranged for applying a non-linear function to said sum and for adding to a non-linear function output a filtered version of a preceding non-linear function output, yielding a digital filter structure output signal,

- a delay line structure arranged for receiving as input the digital filter structure output signal and for outputting a delay line structure output signal to a readout layer, said delay line structure comprising a plurality of delay elements arranged for outputting the delayed signal being a delayed version of the digital filter structure output signal,

whereby the block input signal is in the first reservoir computing block of the cascade a signal applied to the reservoir computing device and whereby in each subsequent reservoir computing block of the cascade the block input signal is, according to a given combining pattern, a delayed version of the signal applied to said reservoir computing device, the delay line structure output signal applied to said readout layer by the previous reservoir computing block in the cascade or a combination thereof.

**Fig.4**

EP 3 182 339 A1

**Description**

**Field of the invention**

The present invention is generally related to the field of machine learning and artificial neural networks. More specifically, it relates to a subclass of artificial neural networks known as echo state networks or reservoir computers.

**Background of the invention**

Reservoir computing is a paradigm recently introduced in machine learning, with the aim of simplifying the training of artificial neural networks (ANN). Within this context, a "reservoir" is a network of many randomly connected neurons or nodes. Each node performs some type of non-linear, in most cases time dependent, operation on its input signal. The input signal of the nodes either comes from the output of other nodes, an externally applied input or both. The reservoir usually comprises several hundred of nodes.

In a traditional ANN the connections between the nodes, called weights, are then adapted in such a way that a given class of input signals results in a given wanted output, i.e. the nodes and their interconnections solve a task. Since this problem is non-linear, there typically is no fast algorithm to find weights that optimally solve a task.

In reservoir computing (RC) the randomly chosen weights between the nodes of the reservoir are not altered once the network is assembled. Instead, the RC output is taken as a linear combination of the outputs of the nodes in the reservoir. Calculating the weights of this readout layer is a linear problem. Therefore these weights can be calculated by performing a least squares fit to the requested output. Mathematically this boils down to performing a pseudo-inverse operation on the matrix holding all neuron states of the reservoir over time, which is a well-founded and understood procedure.

To classify the input in two classes the operation of a reservoir computer can be understood as follows. The non-linearity present in the nodes projects the input signal to a phase space of a higher dimension than the input signal dimensionality. Typically, the input vectors may not be separable by a hyperplane in the lower dimensional input space, but are separable in the higher dimensional space. In that higher dimension the hyperplane separating both classes is described by the readout layer weights. If the linear combination of the node states equals a value above this hyperplane, the input is deemed to belong to one class, and if below, to the other.

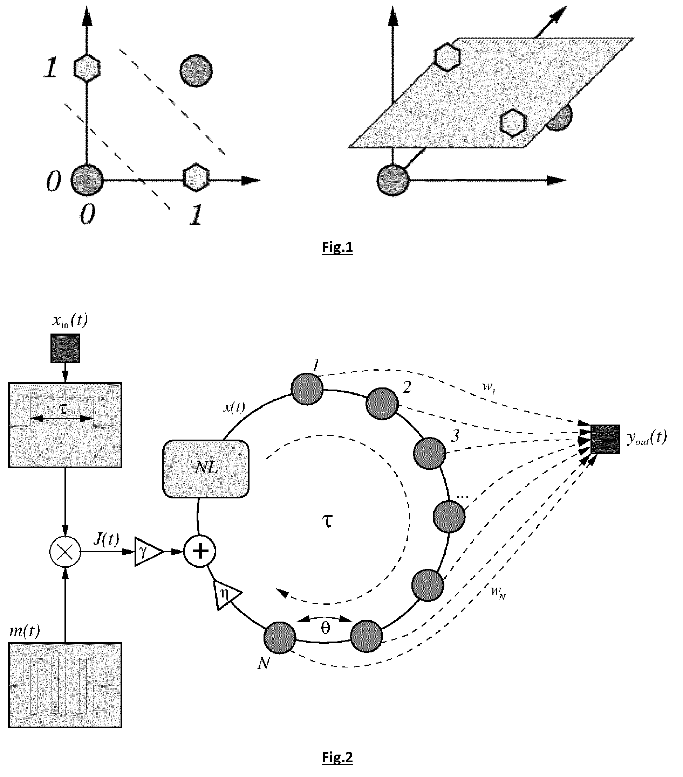

This is illustrated in Fig.1 for a two input exclusive-or (XOR) operation. In the two dimensional input space (left) a hyperplane is a straight line. It is impossible to draw a single straight line separating the inputs into two classes: those that result in a 'zero' output (circles) and those that lead to a 'one' output (hexagons). If the inputs are transformed into a higher dimensional space, for instance three-dimensional, a hyperplane dividing the inputs into two classes, hence, a 2D plane is readily found.

For a system identification task, the reservoir computer is trained such that it mimics a given system. The internal operation or composition of the system to be identified is typically unknown. This is called a 'black box' approach. In contrast, in a 'white box' approach the internal structure of the system to be identified is known, i.e. the system can be divided in well-known or (mathematically) well described blocks.

First a training input is applied to the system and the output is recorded. This forms an input/output training pair. The training input is then applied to the reservoir and the node states over time are recorded in a state matrix. The weights of the readout layer are calculated, using a pseudo-inverse of the state matrix, such that a linearly weighted combination of the node states results in an output as closely matched to the training output as possible. After this training phase, the reservoir computer performs as the system to be identified, generalizing its response to previously unseen input signals.

The main obstacle for the practical and economically sound implementation of reservoir computers (and of any ANN of some size), is that each of the many nodes has to be built and connected to the other nodes. Especially for a photonic implementation this becomes problematic, as combining light into a single non-linear node comprises splicing optical fibres.

It has been shown in the art that a reservoir comprising many non-linear nodes connected with random weights can be replaced by a single non-linear node with delayed feedback. Since delay in photonics is nothing more than a length of optical fibre, this approach radically simplifies the construction of a photonic reservoir computer.

In Fig.2 a diagram of a delay line based reservoir computer (DLRC) is shown. The input $x_{in}(t)$ is sampled every $\tau$, which is also the duration of the delay in the feedback loop. Then the input is multiplied with a masking signal m(t). This mask is repetitive with a period equal to $\tau$ and outputs in each period a sequence of N values randomly chosen from a certain set $\{m_1,..., m_L\}$ and spaced apart $\tau/N$ in time. This mask comprises the random connectivity between the neurons in the reservoir. The simplest mask possibly consists of values drawn from a binary set $\{-1, +1\}$. The masked signal $J(t) = x_{in}(n\tau)m(t)$ is then applied to a non-linear time dependent node, which also receives input from the delayed feedback or echoes. The masked input is scaled by a factor $\gamma$ and the feedback by a factor $\eta$ to bias the non-linear node in the optimal dynamical regime. Both these factors depend on the task at hand as well as the dynamical behaviour of the non-linear node. Generally speaking the system must be biased to the edge of stability (feedback $\eta$ close to but below unity). In the absence of input, the "echoes" of the previous inputs then slowly fade while circulating and the system goes to the zero state. Thus the system shows fading memory, i.e. its dynamical behaviour is somewhat influenced by the past. Finding the optimal settings for these parameters is a non-linear problem which can be tackled by, for example, a gradient descent or scanning of the parameter space.

The output $y_{out}(n)$ is calculated as a linear combination of taps on the delay line:

$$y_{\text{out}}(n) = \sum_{i=1}^{N} w_i x[(n - i/N)\tau)]$$

(1)

These taps are called 'virtual nodes' or 'virtual neurons'. The time interval between the virtual nodes in the delay line is $\theta = \tau/N$.

The training of a single delay line reservoir computer with a single input, as found in the literature, is now explained. The goal of the training of reservoir computer is to determine the weights of the readout layer in such a way that a given input signal, or representative of a class of input signals, results in a desired output signal. This is done as follows. Let $x_1 ... x_n$ be the training input samples and $y_1 ... y_n$ be the output training samples. Each input sample $x_i$ is masked (multiplied) with the fixed mask (suppose $m_1 ... m_N$ is the mask). The masked signal $J_{i,k} = x_i * m_k$ for k=1...N is summed with the previous output of the delay line and applied to the non-linear node, as described above. N is also the number of 'virtual neurons'. The response of the non-linear node is stored in a matrix called the state matrix S, having entries $S_{i,k}$. The response of the non-linear node is also shifted back in the delay line.

The state matrix S thus has n rows with row index i=1...n and N columns with column index k=1...N. Each column of S can be interpreted as a signal $S_{i=1...n,k}$ of its own, with exactly n samples, obtained by some complex non-linear transformation. The output signal of the reservoir computer device $y'_i$, with i=1...n, is formed by the readout layer, i.e. a linear combination of these N signals: $y'_i = \sum_{k=1}^{N} S_{i,k} w_k$, where the $w_k$ (k=1...N) denote the fixed weights (real numbers) of the output layer. Mathematically this is a projection of the N-dimensional function space back to the 1-dimensional function space of the input signal or output signal. In matrix notation this is : **S.w=y'**, where **w** and **y'** are interpreted as column vectors. For illustration reference is made to Fig.2.

The goal of the training is now to find optimal weights $w_k$ such that the distance between an ideal or desired output signal y and the real output signal y', is minimized. The desired output signal is a signal originating from a measurement of the black box system to be identified. The solution to this optimization depends on the distance (mathematically, a norm) used. Often, the Euclidian or $L_2$ norm is used. The weights $w_k$ are chosen to minimize the sum of the squared error:

$$E = \sum_{i=1}^{N} (y_i - y'_i)^2$$

Minimizing E leads to the well-known least-squares problem, which is a linear problem, i.e. solvable by methods of linear algebra. The solution involves the use of the Moore-Penrose pseudo-inverse $S^\dagger = (S^T S)^{-1} S^T$, where $S^T$ is the transpose of the state matrix, and $(.)^{-1}$ the matrix inverse. The optimal weights, that minimize the squared error between the wanted output y and the real output y' is given by $w = S^\dagger y$. This is, however, only one option to optimize the weights. As found in the literature, other norms can be used, leading to other ways of solving the problem. It is also notable that the state matrix S is expanded with a constant column (all ones-column), such that a constant can be added to y'. In such a way a DC bias can be added in case this would be useful.

Since the (linear) optimization of the weights can be done in numerically efficient ways, this training step is much faster than the training step found in other types of artificial neural networks, such as backpropagation. This is the main attractiveness of reservoir computing.

The structure of Fig.2 is not only well suited for photonic implementations. An electronic real-time implementation can be considered using the non-linearity present in a Mackey-Glass Delay Differential Equation (DDE)

$$\dot{x} = -x + f[\eta x(t - \tau) + \gamma J(t)].$$

$$(2)$$

in which the function f is defined as

$$f(x) = \frac{Cx}{1 + (Bx)^p}.$$

$$(3)$$

with B and C constants and the exponent p > 1.

The electronic implementation comprises an analog circuit for the non-linear node, interfaced with digital delay. The core computation and non-linear transformation of the input signal to the higher dimensional phase space is performed by the analog non-linear node. The machine can then be given a task like e.g. real-time prediction of a chaotic time trace, given the previous samples.

When it comes to performing system identification tasks, especially those that simultaneously require a long machine memory and a highly non-linear transformation of the input, there remain some issues to be solved. A known solution for such tasks is to cascade two or more reservoir computers. However, this requires intermediate training signals. These intermediate training signals are only available given a priori knowledge of the internals of the unknown system. This obviously excludes a black box approach, wherein only the input and measured output of the system to be identified are available as a training pair.

There is a need for a solution for cascading two or more reservoir computing blocks wherein the limitations of the prior art approach, in particular with respect to system identification tasks, are overcome or avoided.

**Summary of the invention**

It is an object of embodiments of the present invention to provide for reservoir computing device suitable for system identification tasks while still allowing a so called black box approach.

The above objective is accomplished by the solution according to the present invention.

In a first aspect the invention relates to a reservoir computing device comprising a cascade of at least two reservoir computing blocks, each reservoir computing block comprising

- summing means for making a sum of a block input signal and a delayed signal output by the considered reservoir computing block,
- a digital filter structure arranged for applying a non-linear function to said sum and for adding to a non-linear function output a filtered version of a preceding non-linear function output, yielding a digital filter structure output signal,
- a delay line structure arranged for receiving as input the digital filter structure output signal and for outputting a delay line structure output signal to a readout layer, said delay line structure comprising a plurality of delay elements arranged for outputting the delayed signal being a delayed version of the digital filter structure output signal,

whereby the block input signal is in the first reservoir computing block of the cascade a signal applied to the reservoir computing device and whereby in each subsequent reservoir computing block of the cascade the block input signal is, according to a given combining pattern, a delayed version of the signal applied to said reservoir computing device, the delay line structure output signal applied to said readout layer by the previous reservoir computing block in said cascade, or a combination thereof.

The proposed solution indeed allows for training the reservoir computing device comprising a cascade of a number of computing blocks for performing system identification tasks. By providing at the input of each subsequent computing block not only an output signal coming from the preceding computing block but also a suitably delayed version of the signal applied to the reservoir computing device, each block has at its disposal the best approximation of the desired output signal available so far and the originally applied signal. A best approximation is then determined for the reservoir computing block under consideration. Block after block is so optimized. No intermediate signals are needed anymore in the training. Although the invention is aimed at black box system identification, it is to be noted that it can also function in a white box approach.

In a preferred embodiment one or more blocks of the reservoir computing device are arranged for scaling the signal applied to the reservoir computing device with a first scaling factor and for scaling the delay line structure output signal applied to the readout layer by the previous reservoir computing block with a second scaling factor. This allows accounting for a difference in magnitude between the two signals applied to the reservoir computing block.

Preferably the signal applied to the reservoir computing device is a product of an external data signal with a masking function.

In one embodiment the digital filter structure comprises a first switch to guide the non-linear function output along either a first or a second of two parallel paths, each of the parallel paths having an own scaling factor.

Advantageously, the digital filter structure comprises a first order filter yielding the filtered version of the preceding non-linear function output.

In another embodiment the digital filter structure comprises a second switch to guide the filtered version of the preceding non-linear function output along either a first or a second of two further parallel paths, each of the further parallel paths having an own scaling factor.

In one embodiment the reservoir computing device comprises a third switch to guide the delayed signal along either a first or a second of two parallel feedback paths, each of the parallel feedback paths having an own feedback scaling factor.

Advantageously, the delay line structure output signal outputted to the readout layer is the digital filter structure output signal.

In a preferred embodiment the plurality of delay elements is part of a further digital filter and an output of the further digital filter is used as the delayed signal output.

In another aspect the invention relates to a method for performing system identification on a system receiving an input signal and yielding an output signal. The method comprises

- measuring a plurality of input/output pairs of the input signal and the output signal of the system, said input/output pairs forming a training set,
- training with the training set a reservoir computing device comprising a cascade of at least two reservoir computing blocks as previously described.

In an embodiment the system is a real time audio processing system.

In a more specific embodiment the system is a guitar amplifier.

In another use scenario the system is a hearing aid comprising a microphone which receives babble noise.

For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

The above and other aspects of the invention will be apparent from and elucidated with reference to the embodiment(s) described hereinafter.

**Brief description of the drawings**

The invention will now be described further, by way of example, with reference to the accompanying drawings, wherein like reference numerals refer to like elements in the various figures.

Fig.1 illustrates a transformation to a higher phase space.
Fig.2 illustrates the structure of a delay line based reservoir computer as known in the art.
Fig.3 illustrates a time-discretized version of the scheme of Fig.2.
Fig.4 illustrates an embodiment of the reservoir computing device according to the invention.
Fig.5 illustrates a further embodiment of the invention.
Fig.6 illustrates a reservoir computing device according to the invention with a number of reservoir computing blocks.
Fig.7 illustrates another embodiment of the reservoir computing device according to the invention.
Fig.8 illustrates a portion of a guitar signal and resulting distorted amplifier signal.
Fig.9 illustrates the correspondence between the distortion of the emulated system obtained by means of the reservoir computing device and the real distortion measured with the guitar amplifier.
Fig.10 illustrates a use case where the reservoir computing device of the invention is applied to suppress babble noise.

**Detailed description of illustrative embodiments**

The present invention will be described with respect to particular embodiments and with reference to certain drawings but the invention is not limited thereto but only by the claims.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

It should be noted that the use of particular terminology when describing certain features or aspects of the invention should not be taken to imply that the terminology is being redefined herein to be restricted to include any specific characteristics of the features or aspects of the invention with which that terminology is associated.

In the description provided herein, numerous specific details are set forth. However, it is understood that embodiments of the invention may be practiced without these specific details. In other instances, well-known methods, structures and techniques have not been shown in detail in order not to obscure an understanding of this description.

The present invention is developed starting from the known scheme of Fig.2, which is first discretized and next provided with some additional features to make the resulting solution suitable for system identification tasks while still allowing a so called black box approach.

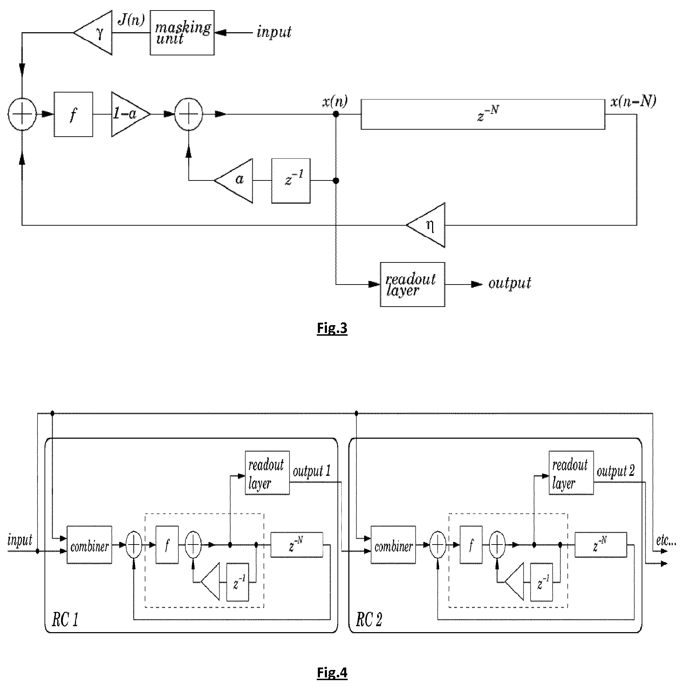

In a first step the digital structure represented in Fig.3 is considered. This discrete time delay line reservoir computing (DLRC) device is obtained by a time discretization of the mathematical expression of Equation 2. The analog non-linear node, responsible for the mixing of node states, is replaced by a first order Infinite Impulse Response (IIR) filter, such that no analog-to-digital and digital-to-analog conversion is needed anymore within the reservoir computing device itself. The clock speed is N times the input sampling speed. This structure is described by the following delay difference equation

$$x(n+1) = ax(n) + (1-a)f[\gamma J(n) + \eta x(n-N)]$$

$$(4)$$

with f denoting the non-linear function, J(n) the masked input and x(n) the reservoir states from which the output of the reservoir computing device are constructed. It can be shown that choosing node mixing parameter $a$ as $a = exp(-\theta)$, with still $\theta = \tau/N$, ensures the same node interaction topology as for the continuous time reservoir computing device.

In order to allow performing system identification tasks which require a lot of computational power it is proposed in this invention to use a cascade of two or more reservoir computing blocks with a structure as in Fig.4, wherein the structure of Fig.3 is modified to allow for two inputs. In Fig.4 an embodiment of a reservoir computing device according to the invention is shown with two reservoir computing blocks. Obviously in the first block of the cascade it is sufficient to have only one input to receive the signal applied to the reservoir computing device. The second block receives as one input a delayed version of the signal that is input to the first reservoir computing block and, as a second input, a signal output by the delay line structure of the preceding block, i.e. the first block in this particular example. In an embodiment with more than two reservoir computing blocks, any subsequent block also receives an appropriately delayed version of the signal applied to the first block and the delay line structure signal output by its preceding reservoir computing block.

Fig.4 also shows the basic structure of the reservoir computing blocks. To the signal received at the input of the reservoir computing block is added a feedback signal. The resulting sum signal is applied to a digital filter structure performing a non-linear operation $f$. The output signal of the non-linear operation is in a filter combined (e.g., summed) with the previous non-linear function output or even an earlier non-linear function output, delayed over the appropriate number of samples. The result forms the output signal of the digital filter structure, which is next fed to a delay line structure. This delay line structure comprises a number of delay elements for creating a delayed version of the digital filter structure output signal. The delay line structure outputs a delay line structure output signal to a readout layer of the reservoir computing device. The delay line structure output signal is via the readout layer also fed to the subsequent block of the reservoir computing cascade.

As already mentioned from the second block of the cascade onwards the input signal being used in the combiner is either the delay line structure output signal of the preceding reservoir computing block, which is applied via the readout layer, or an appropriately delayed version of the signal that was applied to the reservoir computing device. Switching between the two possible inputs occurs in an alternating way according to a given, prescribed pattern. In certain embodiments also a combination of both is used as an input.

In a preferred embodiment the input signal applied to the proposed reservoir computing device is itself a product of an external data signal with a masking function. This was already illustrated in Fig.2. By applying such a masking function the diversity of the state matrix is maximized, thereby allowing a better separation.

In a practical implementation a scaling factor $\gamma$ is applied to the input signal and in the feedback path a feedback scaling factor $\eta$ is used. Further the non-linear function output signal is scaled with a scaling factor $1-\alpha$ and the signal in the feedback loop of the digital filter structure is scaled with a factor a.

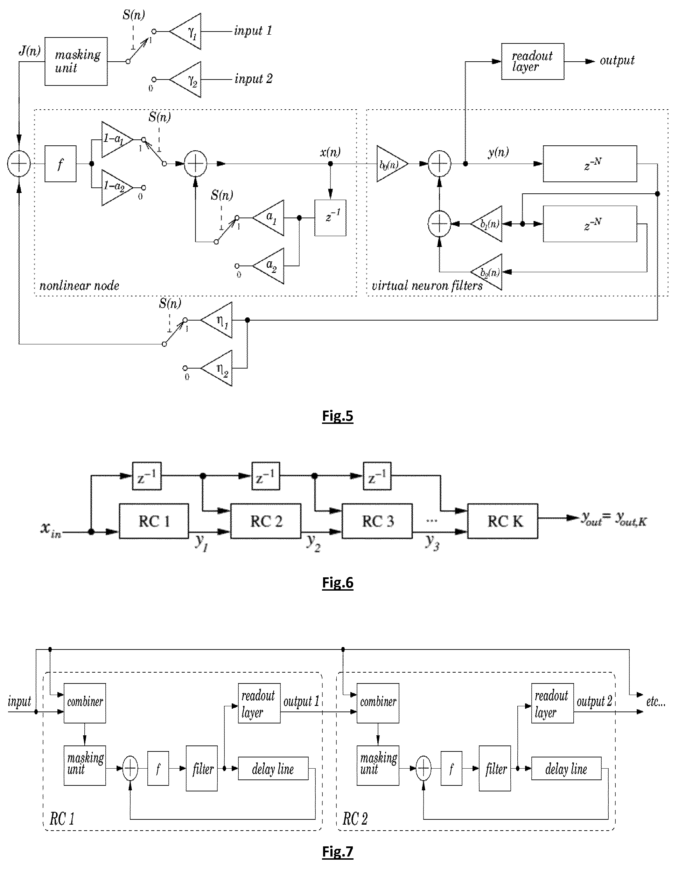

In a preferred embodiment the basic scheme of Fig.4 is further modified as shown in Fig.5. The two inputs there each have a separate programmable input scaling factor $\gamma_1$ and $\gamma_2$, respectively. This offers the benefit that inputs of considerably different amplitudes can be used. In case the two inputs always have a same order of magnitude a single input scaling factor would suffice. In the feedback part of the reservoir computing block a switch is provided that allows switching between two paths, which each have an own programmable feedback strength parameter ($\eta_1$ and $\eta_2$, respectively). Further also for the non-linear function output signal a switch may be provided to switch between two possible mixing parameters $1-a_1$ and $1-a_2$ and in the feedback loop of the filtering structure switching between two parallel subpaths with parameters $a_1$ and $a_2$, respectively, may be possible. A fixed and predetermined switching sequence S(n) applied to the various switches in the scheme determines how both inputs are mixed in the delay lines. After the switches have changed position, the inertia of the non-linear node ensures that for some time, its output is influenced by both inputs. The content of the delay line structure is then influenced by both inputs. For example, taking a switching sequence S(n) consisting of N=2 'ones' followed by N=2 'zeros' implies the inputs have almost no interaction, except for those delay elements following but close to halfway the delay line. The highest interaction between both input streams is reached by using a switching sequence consisting of alternating ones and zeros: S(n) = 1, 0, 1, 0, .... Intermediate interaction is possible by sequences such as S(n) = 1, 1,1,1, 0, 0, 0, 0, 1, 1, 1, 1, ....

Furthermore digital filters can be added in the nodes of the delay line, in such a way that at each time step a different filter is addressed and fed back to the non-linear node. The purpose of these filters is twofold. Firstly, they expand the memory of the reservoir computing block independently of the choice of feedback strength to the non-linear node. Secondly, they allow emphasizing certain frequencies of interest in the input signal. The filters can have any of the known digital filter structures. In Fig.5 two pole filters have been drawn. In the echo state network literature this is known as (bandpass) filtered neurons (BPF).

As such, this structure is readily implementable on various electronic platforms. Among these are: in an FPGA, as a circuit block in a digital ASIC, as software on a desktop computer or laptop or in an embedded system or otherwise programmable system. Another implementation may be as an 'app' on a mobile device.

A block scheme of an embodiment with several reservoir computing blocks is shown in Fig.6. Just as in Fig.4, instead of only receiving the output of the previous RC block, each RC block receives as input also the original input in an appropriately delayed version : the original input given to the i-th RC block in the cascade is delayed over i-1 input samples. This is to avoid introducing a shift between related input and output samples.

It is a characterising feature of this invention that each reservoir computing block after the first does not only get an input from the preceding block but also the original input signal that was applied to the reservoir computing device as a whole. The preceding block yields the so far best approximation of the desired output signal. The desired output signal is a signal originating from a measurement of the black box system to be identified. The current reservoir computing block is then capable of combining this so far best approximation with the original input signal to extract new information and obtain an even better approximation of the desired output. This approach is substantially different from prior art solutions having a cascade wherein the reservoir computing blocks only have one input, namely the output of the previous block (and for the first block the original input). The reservoir computing blocks then lose information after the readout layer, because the readout layer projects from a high-dimensional space to a lower dimensional space. The prior art way of cascading, where each block (except the first) receives the output of the previous block, can only be applied if the system to be identified can be physically interpreted and divided in sub-processes. Each reservoir computing block in the cascade can then emulate a single sub-process. This necessitates a training input-output signal pair per sub-process and impedes maintaining an overall black-box approach. In the present invention the need for underlying knowledge of the system to be identified is avoided and a single input-output training pair suffices.

The operation is understood as follows. Each RC block in the cascade is trained using the original training input as well as the approximation that is produced by the previous RC block. The desired output for the training is the original output of the training pair. For a given set of the parameters ($\gamma_1$, $\gamma_2$, $\eta_1$, $\eta_2$, $a_1$, $a_2$), the (fast) linear training relies on the reservoir states induced by both inputs. The parameters of one RC block are optimized until no further improvement is found, before moving to the next RC block. This optimization can be done by parameter space scanning, gradient descent, genetic algorithm search or any other known optimization technique. As such, each of the following RC blocks receives information not available to the previous one, yet also has the original input signal to work from, resulting in a successive approximation of the system to be identified. This is the key advantage offered over the conventional cascaded approach. Only one input/output training pair and no intermediate signals are needed. Therefore this structure still allows for a black box approach, while at the same time offering inherently increased computational abilities over a single RC block.

For the dual input reservoir computer blocks forming the cascade, the determination of the weights follows the description given for reservoir computing blocks with a single input, as there is no difference, from a training point of view, between masked samples coming from the original global input or from the previous reservoir computer block output. Once the blocks of the reservoir computer device are trained, i.e. the weights are calculated so that an output is obtained close to the desired training output for the given training input. If the training signals were diverse enough, the machine will generalize to previously unseen data.

The performance of a delay line reservoir computer for a certain task also depends on the values of the input scalings $\gamma_{1,2}$ and the feedback scaling $\eta_{1,2}$, as well as the a-values in the non-linear node feedback and these need to be optimized too. The optimization of these machine parameters can be done by, for example, a gradient descent or a scan of a certain ($\eta_{1,2}$, $\gamma_{1,2}$, $a_{1,2}$) area. At each set of parameter values ($\eta_{1,2}$, $\gamma_{1,2}$, $a_{1,2}$), the new optimal readout layer weights w are calculated by, for example, a least squares method as outlined above and the performance is determined. The parameters yielding the best performance, i.e. the least distance from the desired output, are then kept.

For the cascade, a best parameter set and corresponding weights are determined as above, for each reservoir computing block, before moving on to the next block in the cascade. In this way, the cascade is trained from the first to the last reservoir computer block.

For optimal operation, a different mask can be used for every RC block in the cascade. These masks may be a permutation of one fixed mask, or chosen with completely different values. Fig.7 provides an illustration. Each block now has its own masking unit. The use of different masks for every RC block in the cascade gives rise to different dynamical signals in the respective reservoir blocks. In that way, the readout layer of each block can extract new information. Note, however, that a different mask is not a priori necessary, but only an enhancement of the system proposed herein. Since each RC block already receives as input a different input signal, namely the estimate by the previous block, their dynamics will certainly differ. The choice for different masks in each RC block, as opposed to a single fixed mask for every RC block, can help enrich the dynamics of the system as a whole, making it possible to extract more information in the readout layers.

The proposed cascaded structure can still be used in a white box reservoir computing cascade approach. In such an approach a priori knowledge of the internals of the system to be identified lead to parameter ranges within which to look for optimal operation of each RC block in the cascade. In that case the training is performed using intermediate training signals modelling the different stages of the system to be identified.

A typical use case for the reservoir computing device according to the invention is as follows. An input signal x needs to be somehow related to or non-linearly transformed into a certain output signal y. These signals may originate from an input-output relation measurement of a 'black box' system in a typical system identification task. In another typical use case, the input signal may be a signal that is somehow contaminated and/or distorted and the desired output signal is the ideal uncontaminated signal without distortion and/or noise. Once an input/output training pair is established, the reservoir computing device of the invention is trained as described earlier. If the training signal pair is diverse enough (meaning these signals are exemplary of the task to be solved), the reservoir computing device will generalize this signal transforming behaviour to other, previously unseen data.

In order to make reservoir computing applicable to practical problems in real-time audio processing, a fully digital implementation as proposed here is desirable, given the abundance of digital computing hardware in the present day. Obviously, the sampling rate in such a digital implementation needs to be adapted to real-time audio. A minimum rate can be 8 kHz (as in telephony), while a standard rate may be 44.1 kHz.

As an application example related to real-time audio, the problem of the emulation of the non-linear distortion of guitar amplifiers is considered. In contrast to hifi amplifiers, guitar amplifiers (or 'amps' for short) are not intended to faithfully reproduce an amplified version of the input signals. Instead they add linear and non-linear distortion, thereby colouring and shaping the sound. The severity of the distortion can go from adding light accents over a more crunchy sound to full-on clipping, depending on the music genre and artist. The sources of non-linear distortion within these amps include saturation in tube based amplifier stages, saturation of the magnetic core of the output transformer, supply voltage sinks caused by deliberately underdimensioned supply bypass capacitors and/or clipping introduced by diode clipper circuits. Indeed, the design of a "good" guitar amp is more art than science and the amplifier is at least as much responsible for the resulting sound as the guitar is. Furthermore, every brand and even type of amplifier has its own characteristic sound, often instantly recognizable by seasoned players.

Thus there is a problem of obtaining a range of sounds, while on a budget too limited to obtain many different amps. One technical solution for this is on the market today, namely the Kemper Profiling Amplifier. Its custom hardware is capable of learning and emulating the specific sound of an amp, but it does not offer a software solution that runs on other equipment.

The reservoir computing device presented above is applied to learn and then emulate in real time the distortion of a guitar amplifier, using a standard laptop as the computing platform. Reservoir computing has been used before for the purpose of emulating tube like distortion. However, these attempts were not in real time and not starting from a real world amplifier, but rather from a model distortion.

A Behringer UCG102 Guitar-to-USB interface is used to record the guitar signal and the amplifier response. This basically is an external soundcard having a high-impedance input suited for electrical guitars, and a headphone output. A small board with switches and connectors was built to route the signals between the soundcard, the guitar and the amplifier in an easy fashion. No parts of the hardware used here are central to the reservoir computing device of the present invention, yet are only used for convenient signal routing. A Marshall Valvestate 10 is used, which is a small 10 W practice amplifier, with the "boost select" switch to on, as the system to be emulated. The amplifier response is measured at the line-out jack. Alternatively, a microphone can be placed in front of the amp speaker, as is often done in studio recordings.

By means of a software program the following steps are performed :

- send out a short sinewave to measure the loopthrough amplification factor of the soundcard,
- instruct the user to make the necessary adjustments on the amplifier to obtain a desired sound,
- record a few seconds of actual guitar play,
- excite the amplifier with the recorded guitar signal and simultaneously record the response of the amplifier.

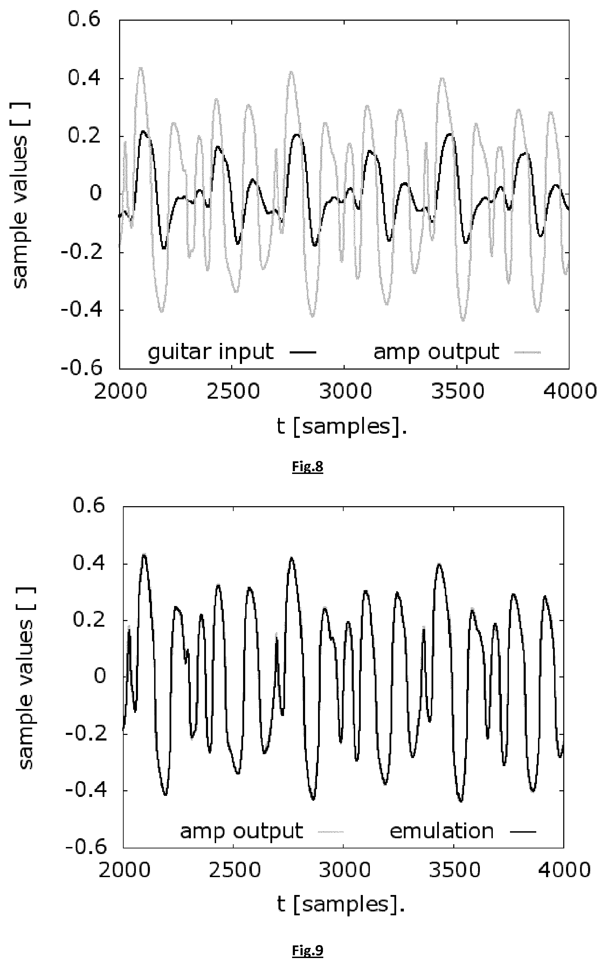

The guitar signal and amplifier response are now used as an input/output training pair. For the training two seconds or 2 x 44100 samples of sound were used. Fig.8 shows a small portion of the guitar signal and resulting distorted amplifier signal, as measured using this setup.

A device with a cascade of 5 RC blocks is used, each having N = 100 neurons. The centre frequencies of the two pole filter bank are logarithmically spaced between 400 Hz and 19 kHz. The function in the non-linear node is chosen as $f(x) = x/(1+x^2)$. Each RC block was given a mask with values drawn at random from $\pm\{0.2, 0.6, 1.0\}$. The parameters and weights of the cascaded RC device are then optimized and saved in a 'patch' file. This patch file now contains all the settings needed to emulate the amp. A 'player' program then uses the patch to emulate the amplifier in real time. The emulated output is found at the headphone output of the soundcard. Fig.9 illustrates the good correspondence between the emulated and real distortion.

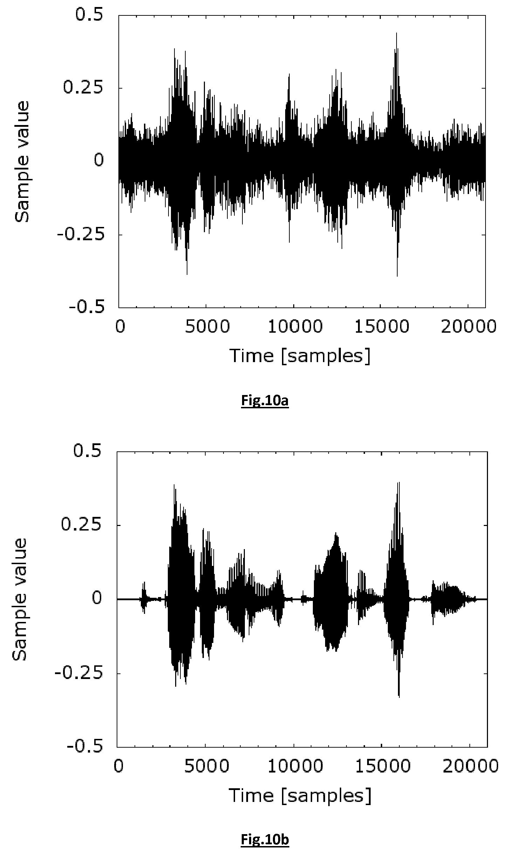

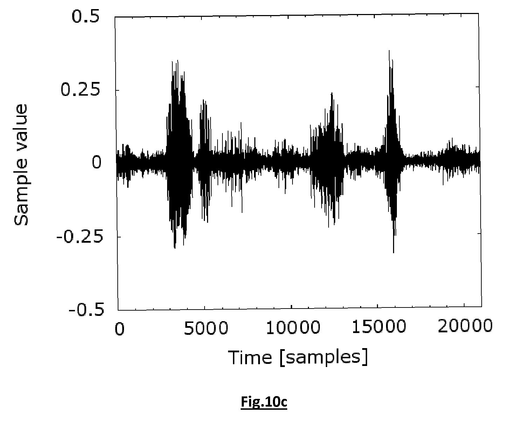

Another example application is the removal of babble noise from a hearing aid microphone signal. As the name suggests, babble noise consists of many simultaneous conversations going on in the background. This problem is also known as the 'cocktail party' effect. As known by those working in the field of hearing aids, speech intelligibility is highly influenced by the intensity and type of background noise. Babble noise can partially mask a speaker. Babble noise is particularly detrimental to speech intelligibility, because it is aperiodic. Therefore our brains cannot filter it out very well. Since babble noise occupies the same bandwidth as the main speaker, linear filtering techniques are not useful. A conventional method to suppress babble and other types of noise uses the phase adjusted sum of two microphones in a technique reminiscent of antenna beamforming. The cascaded reservoir structure of the present invention can be used to nonlinearly filter the background noise and thus improve intelligibility of the main speaker. By way of example a noisy speech corpus database is considered. A reservoir computing device comprising a cascade of five RC blocks of one hundred virtual neurons trained with the regular time based training. The training input is a male voice uttering the sentence *"The sky that morning was clear and bright blue"* in the presence of babble noise, such that the signal-to-noise ratio is 0 dB. In the database the speech is recorded with a sample rate of 8 kHz. The target response is the same speech sample without the noise. The first 10000 samples are used for training and the system is then tested on the next 100000 samples. Results are shown in Fig.10. The noisy input signal is shown in Fig.10a and the clean target signal in Fig.10b. The response of the cascaded reservoir computing device is presented in Fig.10c. Visually, there is a resemblance between the target and response. Auditorily, there is a marked improvement in the speech intelligibility as the babble noise is severely reduced, while the speech remains largely intact.

While the invention has been illustrated and described in detail in the drawings and foregoing description, such illustration and description are to be considered illustrative or exemplary and not restrictive. The foregoing description details certain embodiments of the invention. It will be appreciated, however, that no matter how detailed the foregoing appears in text, the invention may be practiced in many ways. The invention is not limited to the disclosed embodiments.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

**Claims**

1. Reservoir computing device comprising a cascade of at least two reservoir computing blocks, each reservoir computing block comprising

   - summing means for making a sum of a block input signal and a delayed signal output by the reservoir computing block,
   - a digital filter structure arranged for applying a non-linear function to said sum and for adding to a non-linear function output a filtered version of a preceding non-linear function output, yielding a digital filter structure output signal,
   - a delay line structure arranged for receiving as input said digital filter structure output signal and for outputting a delay line structure output signal to a readout layer, said delay line structure comprising a plurality of delay elements arranged for outputting said delayed signal being a delayed version of said digital filter structure output signal,

   whereby said block input signal is in the first reservoir computing block of said cascade a signal applied to said reservoir computing device and whereby in each subsequent reservoir computing block of said cascade said block input signal is, according to a given combining pattern, a delayed version of said signal applied to said reservoir computing device, the delay line structure output signal applied to said readout layer by the previous reservoir computing block in said cascade or a combination thereof.

2. Reservoir computing device as in claim 1, arranged for scaling said signal applied to said reservoir computing device with a first scaling factor and for scaling said delay line structure output signal applied to the readout layer by the previous reservoir computing block with a second scaling factor.

3. Reservoir computing device as in claim 1 or 2, wherein said signal applied to said reservoir computing device is a product of an external data signal with a masking function.

4. Reservoir computing device as in any of claims 1 to 3, wherein said digital filter structure comprises a first switch to guide said non-linear function output along either a first or a second of two parallel paths, each of said parallel paths having an own scaling factor.

5. Reservoir computing device as in any of the previous claims, wherein said digital filter structure comprises a first order filter yielding said filtered version of said preceding non-linear function output.

6. Reservoir computing device as in any of the previous claims, wherein said digital filter structure comprises a second switch to guide said filtered version of said preceding non-linear function output along either a first or a second of two further parallel paths, each of said further parallel paths having an own scaling factor.

7. Reservoir computing device as in any of the previous claims, comprising a third switch to guide said delayed signal along either a first or a second of two parallel feedback paths, each of said parallel feedback paths having an own feedback scaling factor.

8. Reservoir computing device as in any of the previous claims, wherein said delay line structure output signal outputted to said readout layer is said digital filter structure output signal.

9. Reservoir computing device as in any of the previous claims, wherein said plurality of delay elements is part of a further digital filter and an output of said further digital filter is used as said delayed signal output.

10. Method for performing system identification on a system receiving an input signal and yielding an output signal, the method comprising

    - measuring a plurality of input/output pairs of said input signal and said output signal of said system, said input/output pairs forming a training set,
    - training with said training set a reservoir computing device comprising a cascade of at least two reservoir computing blocks as in any of claims 1 to 9.

11. Method for performing system identification as in claim 10, wherein said system is a real time audio processing system.

12. Method for performing system identification as in claim 11, wherein said system is a guitar amplifier.

13. Method for performing system identification as in claim 10 or 11, wherein said system is a hearing aid comprising a microphone which receives babble noise.

**Fig.1**

**Fig.2**

**Fig.3**

**Fig.4**

13

**Fig.5**

**Fig.6**

**Fig.7**

**Fig.8**

**Fig.9**

**Fig.10a**

**Fig.10b**

**Fig.10c**

Europäisches
Patentamt

European
Patent Office

Office européen
des brevets

## EUROPEAN SEARCH REPORT

Application Number

EP 15 20 0681

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | M. C. SORIANO ET AL: "Minimal approach to neuro-inspired information processing", FRONTIERS IN COMPUTATIONAL NEUROSCIENCE, vol. 9, 68, 2 June 2015 (2015-06-02), XP055281664, DOI: 10.3389/fncom.2015.00068 * sections 1, 2 and 4 * | 1-13 | INV. G06N3/04 G06N3/063 |
| X | N. D. HAYNES ET AL: "Reservoir computing with a single time-delay autonomous Boolean node", PHYSICAL REVIEW E, vol. 91, 020801R, 23 February 2015 (2015-02-23), XP055281686, DOI: 10.1103/PhysRevE.91.020801 * the whole document * | 1-13 | |
| X | F. Grèzes: "Reservoir computing", Dissertation in Computer Science at Graduate Center of City University of New York, 4 September 2014 (2014-09-04), XP055281665, Retrieved from the Internet: URL:http://www.gc.cuny.edu/CUNY_GC/media/Computer-Science/Student Presentations/Felix Grezes/Second_Exam_Survey_Felix_Grezes_9_04_2014.pdf [retrieved on 2016-06-17] * sections 3.3 and 3.4 * | 1-13 | TECHNICAL FIELDS SEARCHED (IPC) G06N |

-/--

The present search report has been drawn up for all claims

| Place of search | Date of completion of the search | Examiner |
|---|---|---|
| The Hague | 21 June 2016 | Douarche, Nicolas |

CATEGORY OF CITED DOCUMENTS

X : particularly relevant if taken alone
Y : particularly relevant if combined with another
　document of the same category
A : technological background
O : non-written disclosure
P : intermediate document

T : theory or principle underlying the invention
E : earlier patent document, but published on, or
　after the filing date
D : document cited in the application
L : document cited for other reasons

& : member of the same patent family, corresponding
　document

EPO FORM 1503 03.82 (P04C01)

Europäisches
Patentamt

European
Patent Office

Office européen
des brevets

# EUROPEAN SEARCH REPORT

Application Number

EP 15 20 0681

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | L. APPELTANT: "Reservoir computing based on delay-dynamical systems", THESIS FOR PHD IN ENGINEERING SCIENCES AT UNIVERSITÉ LIBRE DE BRUXELLES, 22 May 2012 (2012-05-22), XP055281684, ISBN: 978-90-5718-120-7 * chapters 2, 3, 5 and 6 * | 1-13 | |
| X | E. A. ANTONELO, B. SCHRAUWEN: "Online learning navigation behaviors for small mobile robots with reservoir computing architectures", IEEE TRANSACTIONS ON NEURAL NETWORKS AND LEARNING SYSTEMS, vol. 26, no. 4, 3 June 2014 (2014-06-03), pages 763-780, XP011576090, DOI: 10.1109/TNNLS.2014.2323247 * sections III and VI * | 1-13 | |
| X | T. WAEGEMAN ET AL: "Feedback control by online learning an inverse model", IEEE TRANSACTIONS ON NEURAL NETWORKS AND LEARNING SYSTEMS, vol. 23, no. 10, 15 August 2012 (2012-08-15), pages 1637-1648, XP011460816, DOI: 10.1109/TNNLS.2012.2208655 * chapters II and III * | 1-13 | TECHNICAL FIELDS SEARCHED (IPC) |
| A | F. TRIEFENBACH ET AL: "Acoustic modeling with hierarchical reservoirs", IEEE TRANSACTIONS ON AUDIO, SPEECH AND LANGUAGE PROCESSING, vol. 21, no. 11, 29 August 2013 (2013-08-29), pages 2439-2450, XP011529573, DOI: 10.1109/TASL.2013.2280209 * the whole document * | 1-13 | |

-/--

The present search report has been drawn up for all claims

| Place of search | Date of completion of the search | Examiner |
|---|---|---|
| The Hague | 21 June 2016 | Douarche, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 3

Europäisches
Patentamt

European
Patent Office

Office européen
des brevets

## EUROPEAN SEARCH REPORT

Application Number

EP 15 20 0681

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | S. Ortín et al: "Memory and nonlinear mapping in reservoir computing with two uncoupled nonlinear delay nodes", The 2012 European Conference on Complex Systems (ECCS'12), 6 September 2012 (2012-09-06), XP055282100, Retrieved from the Internet: URL:http://www.ulb.ac.be/polytech/spg/ECCS2012/Presentations_ECCS_2012.zip [retrieved on 2016-06-17] * the whole document * | 1-13 | |

TECHNICAL FIELDS
SEARCHED        (IPC)

The present search report has been drawn up for all claims

| Place of search | Date of completion of the search | Examiner |
|---|---|---|
| The Hague | 21 June 2016 | Douarche, Nicolas |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)